Europäisches Patentamt

European Patent Office

Office européen des brevets

(19)

(11) Publication number: 0 327 008
A2

## (12) EUROPEAN PATENT APPLICATION

(21) Application number: 89101606.5

(51) Int. Cl.⁴ G11B 23/03 , G11B 23/28

(22) Date of filing: 31.01.89

(30) Priority: 04.02.88 JP 14494/88

(43) Date of publication of application:
09.08.89 Bulletin 89/32

(84) Designated Contracting States:
DE GB

(71) Applicant: KONICA CORPORATION
26-2 Nishishinjuku 1 chome
Shinjuku-ku Tokyo(JP)

(72) Inventor: Ishikawa, Mitsuru
c/o Konica Corporation 1 Sakura-machi
Hino-shi Tokyo(JP)
Inventor: Miyamoto, Haruki
c/o Konica Corporation 1 Sakura-machi
Hino-shi Tokyo(JP)

(74) Representative: Türk, Gille, Hrabal
Bruckner Strasse 20
D-4000 Düsseldorf 13(DE)

(54) Magnetic disk cartridge.

(57) Disclosed is a magnetic disk cartridge provided with a write-protector arranged on a main body of the cartridge. There is further provided an engagement mechanism for engaging the main body of the cartridge and the write-protector so that the write-protector may not be moved toward the inner side of the cartridge.

FIG. I

EP 0 327 008 A2

# MAGNETIC DISK CARTRIDGE

## BACKGROUND OF THE INVENTION

The present invention relates to a magnetic disk cartridge such as, for example, a 3.5-inch floppy disk cartridge.

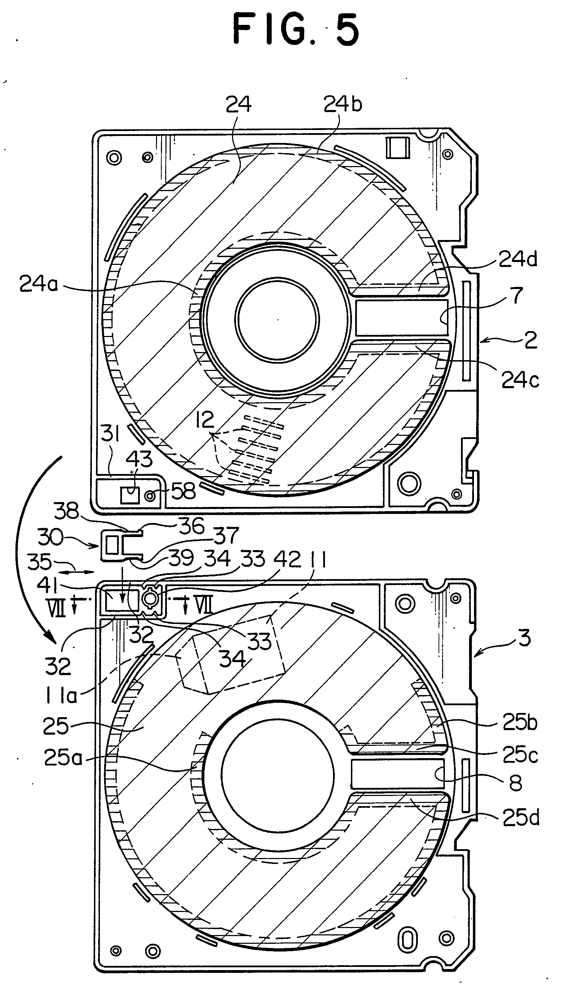

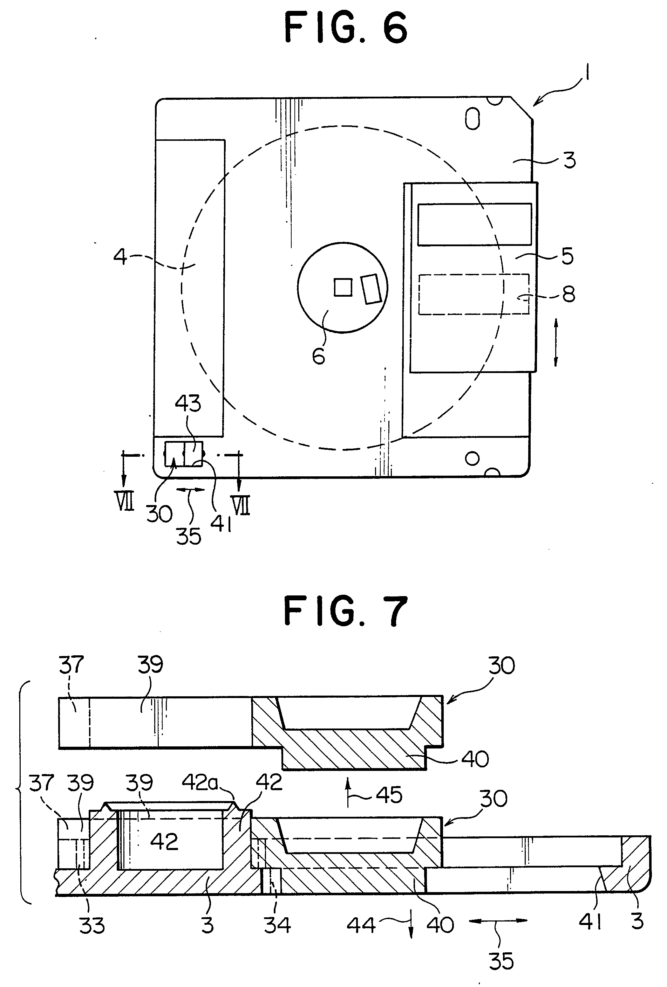

For the explanation of a conventional cartridge of aforesaid type, Fig. 5 shows inner sides of separated upper and lower shells which form the cartridge 1, and Fig. 6 shows a reverse side of the cartridge 1. Each shell is provided with each of openings 7 and 8 and an arrangement is made so that floppy disk (media) 4 inside may be seen through these openings 7 and 8. When a disk is not used, openings 7 and 8 are usually covered by shutter 5 which is made of metal and has a U-shaped sectional view, causing disk 4 not to be seen. When driving a disk (for magnetic recording), however, the shutter is located at its open position, causing the recording surface of disk 4 to be seen through the uncovered openings 7 and 8. Incidentally, disk 4 is fixed on center hub 6 will be attached on the spindle at a driver side, and is held rotatably between upper and lower shells 2 and 3. When the disk is driven, liner 25 on the lower shell 3, disk 4 and liner 24 on upper shell 2 are pressed against rib 12 on upper shell 2 by lifter 11 which is fixed on lower shell 3 at the position of 11a, which improves not only the rubbing between disk and liner (i.e. cleaning of disk) but also the contact area where the liner (24, in particular) and disk 4 rub each other in a relatively broader area. Incidentally 24a, 24b, 25a, and 25b in the figure represent the area where liners are glued on the shells.

On cartridge 1, write-protector 30 is provided at the position corresponding to the corner of each of upper and lower shells. Namely, protruded stripe portions 31 and 32 for the purpose of a guide are formed at aforesaid corners of upper and lower shells respectively. Between protruded stripes 32 on lower shell 3, there are arranged two pairs of stopper claws 33 and 34, each pair of stopper claws facing each other. These stopper claws regulate the position of write-protector 30 in its sliding direction (the direction of 35 in Fig. 5 and Fig. 6). Further, write-protector 30 is provided, on its pair of arms 38 and 39, with small protrusions 36 and 37 which engage with aforesaid stopper claws 33 and 34. Fig. 7 shows an enlarged sectional view taken on line VII - VII in Fig. 5 wherein embossed portion 40 provided on the external surface of write-protector 30 is inserted in opening 41 of a rectangular shape on lower shell 3 and both arms 38 and 39 are located, within aforesaid protruded stripes 32, at the positions between stopper claws 33 and 34 and protrusion 42 in a shape of a small cylinder. Then, disk 4 fixed on center hub 6 is assembled into lower shell 3, and upper shell 2 is welded onto lower shell 3 at predetermined spots on the shell and finally, shutter 5 and a spring therefor (not illustrated) are attached to finish assembling the cartridge 1.

Write-protector 30 to be provided in cartridge 1 assembled in aforesaid manner is arranged so that it may slide in the direction marked with arrow 35, and under the condition that small protrusions 36 and 37 are engaged with claws 33, opening 43 on upper shell 2 is covered with write-protector 30 to generate the writable condition. However, when write-protector 30 slides to the point where its small protrusions 36 and 37 are engaged with claws 34 (the position shown in Figs. 5 and 6), opening 43 is uncovered to generate the impossible condition for writing, thus it is possible to avoid an accidental erasure. Such selection for sliding position of write-protector 30 may be made by forcing the write-protector to move after releasing, by means of a pin inserted from the outside of a cartridge, the engagement between claws 33/34 and small protrusions 36/37.

Aforesaid write-protector 30 is arranged in lower shell 3 in the manner mentioned above and it never moves out of the shell because its movement is restricted in two directions, one is its sliding direction 35 and the other is the direction 44 toward the outside of a cartridge (outside of lower shell 3). However, as shown in Fig. 7 in an enlarged manner, write protector 30 easily moves out in the direction marked with arrow 45 (i.e. toward the inside of a cartridge in the direction of its thickness) because the write-protector is simply inserted in lower shell 3. During the period from the insertion of write-protector 30 into lower shell 3 to the welding of both shells, in particular, write-protector 30 tends to come out of the shell, causing its positional deviation, its coming off and its dropping, which is extremely problematic. Further, in the case of a clam shell type wherein two points on the shell at the side of shutter 5 are welded, when an undesirable positional deviation takes place on write-protector 30 as stated above during the course of its assembly or transportation to the next step, the write-protector requires its resetting, which is disadvantageous.

## SUMMARY OF THE INVENTION

An object of the invention is to offer a magnetic disk cartridge of a type which causes its write-protector not to deviate, not to come off and not to drop.

Namely, the invention relates to a magnetic disk cartridge provided with a write-protector arranged on a main body of the cartridge, wherein an engagement (e.g. fitting) means that causes aforesaid main body of the cartridge and aforesaid write-protector to engage (e.g. to fit) each other is provided so that aforesaid write-protector may not be moved toward the inner side of the cartridge in the direction of the thickness of the cartridge.

## BRIEF DESCRIPTION OF THE DRAWINGS

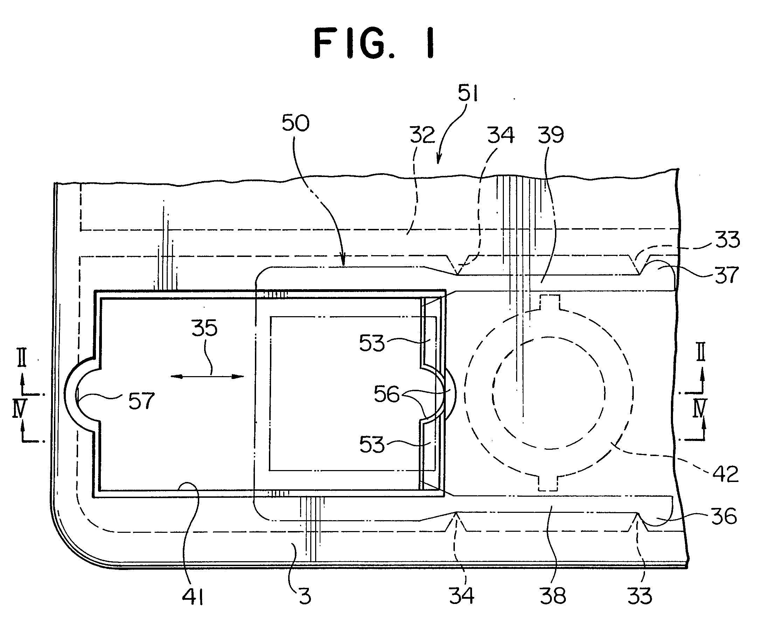

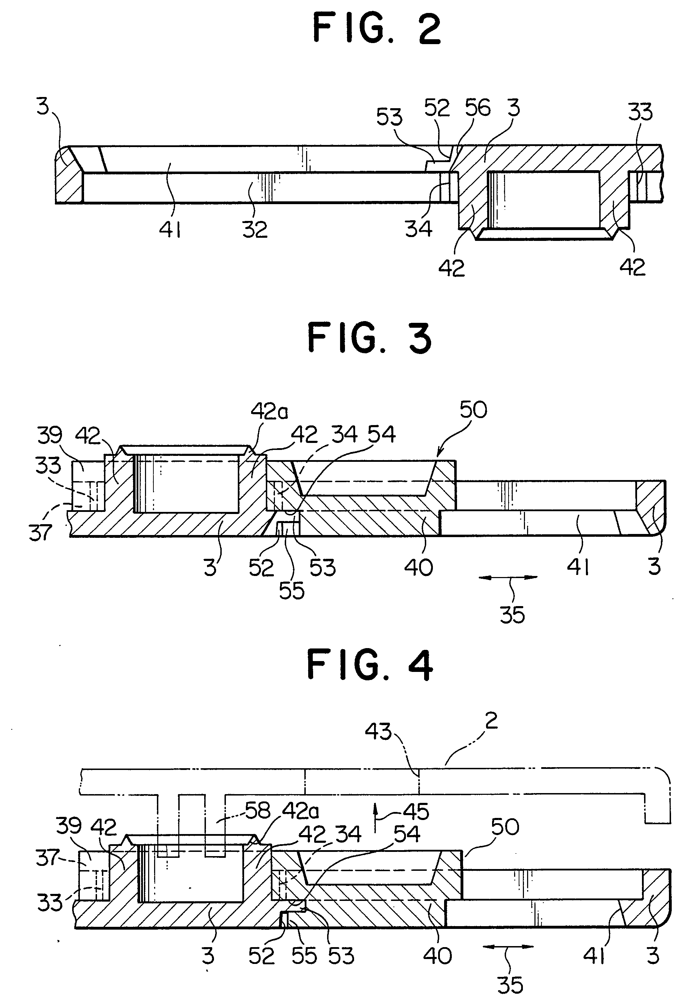

Figs. 1 - 4 show an example of the invention, wherein Fig. 1 is an enlarged back side view of a key portion of a cartridge, Fig. 2 is a sectional view taken on line II - II in Fig. 1, Fig. 3 is a sectional view of the aforesaid key portion (sectional view in Fig. 2 turned upside down and reversed in the opposite direction) and Fig. 4 is a sectional view taken on line IV - IV in Fig. 1 similar to Fig. 3.

Figs. 5 - 7 show a conventional example wherein Fig. 5 shows a plan view of inner surface of each of upper and lower shells separated, Fig. 6 is a back side view of the cartridge and Fig. 7 is an enlarged sectional view taken on line VII -VII in Fig. 5.

## DETAILED DESCRIPTION OF THE INVENTION

Examples of the invention will be explained as followws.

Figs. 1 - 4 show the key portions of 3.5-inch floppy disk cartrdge 51 in the example of the invention.

Fig. 1 is an enlarged back side view of a part corresponding in position to a location (namely, a corner portion of lower shell 3) where a write-protector is attached on the cartridge shown in Fig. 6. Fig. 2 is a sectional view taken on line II - II in Fig. 1 and it shows the lower shell only. The write-protector shown with an imaginary line in the figure has, as stated above, a pair of arms 38 and 39 having at their tips small protrusions 36 and 37 which are engaged with stopper claws 33 and 34 of lower shell 3 respectively, and is mounted, as stated above, on the inner side of protruded stripe 32 of lower shell 3. Other portions identical to those stated above are given common symbols. Incidentally, upper shell 2 which is not illustrated has opening 43 shown in Figs. 5 and 6 at the same position and is welded onto lower shell 3.

What is noticeable in the present example is that step 52 is formed at the location of a shorter side on the side of protrusion 42 of opening 41 to where protector 50 is to be attached on lower shell 3, flange portion 53 slightly protruded is provided in opening 41. Fitting portion 33 having concaved portion 54 that engages with flange portion 53 in a sandwich style as shown in Figs. 3 and 4 is provided on the side of protector 50 corresponding to flange portion 53. Incidentally, Figs. 3 and 4 show the sectional view of Fig. 2 turned upside down and reversed in the opposite direction wherein the inside surface of lower shell 3 faces upward and protector 50 is shown with a solid line.

In the assembling process of a cartridge, therefore, when attaching protector 50 on lower shell 3, not only the protector is to be inserted but also the flange portion 53 on the side of aforesaid shell 3 is to be fitted in the concaved portion 54 on fitting portion 55 of the protector 50, thereby, the protector 50 does not slip out off its position upward of shell 3 in the direction of the thickness of cartridge any longer, and is fixed (tentative fixing) at aforesaid fitting position (corresponding to a writable condition). Consequently, during the period when protector 50 is attached on lower shell 3 and both upper shell 2 and lower shell 3 are welded (at the mating portion formed between edge portion 42a on protrusion 42 of lower shell 3 and the inner surface of upper shell 2 when protrusion 58 of upper shell 2 is inserted into protrusion 42 of lower shell 3) as shown with an imaginary line in Fig. 4, the protector 50 neither deviates in position nor comes off, thereby suspension of assembly line operation and resetting may be prevented and further the reduction of yield caused by parts missing may also be prevented. As a matter of course, protector 50 does not deviate toward the outside 45 (upward direction in Figs. 3 and 4) of lower shell 3 and it is possible to select the possible condition or impossible condition for writing by means of the conventional sliding in the direction of arrow 35. In the figure, 56 and 57 are the recessed concaved portion in a circular arc shape where the pin and others are to be inserted for the selection mentioned above. When sliding toward the selection of impossible condition, aforesaid flange portion 53 needs to be released from the engagement with concaved portion 54, which can be done relatively easily by applying a force in a lateral direction (direction to the right side in Fig. 4) by means of a pin.

The foregoing is an exemplification of the present invention and aforesaid example may further be modified, based upon the technology concept of the invention, into some varieties.

For example, the structure for fitting between protector 50 and lower shell 3 does not need to be limited to the foregoing and the location for the fitting may further be changed to the shorter side on the opposing side of opening 41. Further, as aforesaid fitting portion 55, it is possible to form the protrusion that obstructs, by catching flange portion 53, the movement of protector 50 when a force upward in Fig. 4 is applied on the protector 50, without having aforesaid sandwich type engagement that sandwiches the flange portion 53. Further, aforesaid protector 50 may be provided at two locations (for 2-megabyte use) on the cartridge instead of a single location.

Since the engagement means for preventing a write-protector from moving toward the inner side of a cartridge is provided, the write-protector does not deviate, does not come off or does not drop accidentally any longer during the assembly process, which prevents the suspension of assembly line operation or resetting and further avoids the reduction of the yield caused by the parts missing.

## Claims

1. In a magnetic disk cartridge provided with a write-protector arranged on a main body of said cartridge, the improvement wherein an engagement means that causes aforesaid main body of the cartridge and aforesaid write-protector to engage each other is provided so that aforesaid write-protector may not be moved toward the inner side of the cartridge.

# FIG. 1

# FIG. 2

# FIG. 3

# FIG. 4

# FIG. 5

# FIG. 6

# FIG. 7